# EUROPÄISCHE PATENTSCHRIFT

(11) **EP 3 975 921 B1**
(45) Veröffentlichungstag und Bekanntmachung des Hinweises auf die Patenterteilung: **10.07.2024**
(21) Anmeldenummer: 20742641.2
(22) Anmeldetag: 28.05.2020
(51) Int. Cl.: A61C 19/00, A61C 1/00, A61C 13/00

(54) **DENTALBEARBEITUNGSMASCHINE**
DENTAL MACHINE TOOL
MACHINE DE TRAITEMENT DENTAIRE

(30) Priorität: 29.05.2019 DE 202019002338 U
(43) Veröffentlichungstag der Anmeldung: 06.04.2022
(73) Patentinhaber: imes-icore GmbH, 36132 Eiterfeld (DE)
(72) Erfinder: STARK, Christoph, 36132 Eiterfeld (DE); ULLRICH, Sebastian, 36132 Eiterfeld (DE)
(74) Vertreter: Weihrauch, Frank
(86) Internationale Anmeldenummer: PCT/DE2020/000114
(87) Internationale Veröffentlichungsnummer: WO 2020/239158

(56) Entgegenhaltungen:
- EP-A2- 3 415 270
- DE-A1- 102009 011 443
- JP-A- H0 655 391

## Beschreibung

Die Erfindung betrifft eine Dentalbearbeitungsmaschine zur Bearbeitung von Dentalobjekten.

Aus dem Stand der Technik sind bereits verschiedene Dentalbearbeitungsmaschinen bekannt, welche ein Dentalobjekt in verschiedenen Technologien bearbeiten können. Nach dem Stand der Technik werden hierbei für verschiedene Bearbeitungsschritte jeweils spezielle Dentalbearbeitungsmaschinen bereitgehalten und die Rohlinge in geeigneter Abfolge den Bearbeitungen in den unterschiedlichen Dentalbearbeitungsmaschinen unterzogen. Durch JP H 06 55391A ist es dagegen bekannt, in einer Bearbeitungsmaschine mehrere Bearbeitungsköpfe vorzusehen, zu denen das Dentalobjekt verfahren werden kann.

Die Aufgabe der Erfindung ist es, eine Bearbeitungsmaschine für Dentalobjekte aufzuzeigen, welche eine schnelle und effiziente Bearbeitung ermöglicht sowie eine hohe Präzision der Bearbeitung bereitstellt.

Die Aufgabe wird durch die im Patentanspruch 1 aufgeführten Merkmale gelöst. Bevorzugte Weiterbildungen ergeben sich aus den Unteransprüchen.

Die erfindungsgemäße Dentalbearbeitungsmaschine weist erfindungsgemäß als Grundkomponenten mindestens eine erste Dentalbearbeitungseinheit und eine zweite Dentalbearbeitungseinheit auf.

Erfindungsgemäß weist die erste Dentalbearbeitungseinheit ein erstes Gehäuse und einen ersten Bearbeitungskopf auf.

Das erste Gehäuse bildet erfindungsgemäß einen ersten Bearbeitungsraum aus. Der erste Bearbeitungsraum wird vom ersten Gehäuse vorzugsweise komplett umschlossen. Somit werden zum einen die internen Komponenten vor Beschädigungen von außen und zum anderen die äußere Umgebung vor einer Verschmutzung durch Bearbeitungsnebenprodukte oder gegenüber Verletzungsgefahren geschützt. Somit wird zugleich eine hohe Arbeitssicherheit erreicht.

Das erste Gehäuse besitzt vorzugsweise einen abnehmbaren oder öffenbaren Teil, welcher einen Zugang für Wartungs- oder Bestückungsarbeiten darstellt.

Der erste Bearbeitungskopf ist erfindungsgemäß in dem ersten Bearbeitungsraum angeordnet. Er wird vorzugsweise durch die Steuerungseinheit der Dentalbearbeitungsmaschine gesteuert.

Erfindungsgemäß ist dem ersten Bearbeitungskopf eine erste Bearbeitungszone zugeordnet. Die erste Bearbeitungszone ist der Bereich, in welchem der erste Bearbeitungskopf auf ein Dentalobjekt einwirken und dieses bearbeiten kann. Die räumliche Anordnung der Bearbeitungszone wird durch die Position des Bearbeitskopfs sowie durch die Bewegungsachsen von Bearbeitungskopf und Dentalobjekt bestimmt.

Als Dentalobjekt im Sinne der vorliegenden Anmeldung wird ein Zahnersatzteil, sowie ferner ein Teil oder eine Bearbeitungsvorstufe eines Zahnersatzteils verstanden. Dentalobjekte sind somit insbesondere Kronen, Brücken, Teleskope, Stegkonstruktionen, Abutments, Primärkronen, Sekundärkronen, therapeutische Schienen sowie Hilfskonstruktionen, welche zur Herstellung oder Verwendung von Zahnersatz dienen wie beispielsweise Schablonen oder Gebissmodelle.

Die Dentalbearbeitungsmaschine umfasst erfindungsgemäß ferner mindestens eine zweite Dentalbearbeitungseinheit, wobei die zweite Dentalbearbeitungseinheit ein zweites Gehäuse und einen zweiten Bearbeitungskopf aufweist. Die zweite Dentalbearbeitungseinheit ist dem Grunde nach in gleicher Weise wie die erste Dentalbearbeitungseinheit aufgebaut.

Der zweite Bearbeitungskopf ist vorzugweise in einer anderen Bearbeitungstechnologie als der erste Bearbeitungskopf ausgebildet. Im Folgenden wird die Bearbeitungstechnologie auch verkürzt als Technologie bezeichnet. Es ist jedoch ebenfalls möglich, dass beide Bearbeitungsköpfe in der gleichen Technologie ausgebildet sind. So sind beispielsweise auch zwei Bearbeitungsköpfe möglich, welche zwei Fräswerkzeuge mit unterschiedlichen Eigenschaften, beispielsweise in der Form oder in der Rauheit, kombinieren.

Das zweite Gehäuse bildet erfindungsgemäß einen zweiten Bearbeitungsraum aus, in dem der zweite Bearbeitungskopf angeordnet ist.

Die beiden Gehäuse können baulich miteinander verbunden sein. Ebenso kann in besonderen Ausführungen das erste Gehäuse das zweite Gehäuse in seinen ersten Bearbeitungsraum aufnehmen und umgekehrt.

Hierdurch ist eine gemeinsame Aufnahme und Ableitung von flüssigen Betriebsmitteln wie beispielsweise einer Kühlflüssigkeit oder Schleifmilch möglich, was eine einfachere Bauform ermöglicht.

Erfindungsgemäß ist dem zweiten Bearbeitungskopf eine zweite Bearbeitungszone zugeordnet. Die zweite Bearbeitungszone ist der Bereich, in dem der zweite Bearbeitungskopf auf das Dentalobjekt einwirken und dieses bearbeiten kann. Beide Bearbeitungszonen liegen also jeweils in dem entsprechenden jeweiligen Bearbeitungsraum.

Die Dentalbearbeitungsmaschine weist ferner einen verfahrbaren Dentalobjektträger auf. Der verfahrbare Dentalobjektträger ist ausgebildet, ein Dentalobjekt aufzunehmen und dieses in einer X-Achse linear zu verfahren.

Der verfahrbare Dentalobjektträger umfasst eine stationäre Linearführung, beispielsweise eine Schiene, welche in einer X-Achse angeordnet ist, sowie einen auf der stationären Linearführung linear verfahrbaren Träger, beispielsweise einen Schlitten, welcher Mittel zur Fixierung eines zu bearbeitenden Dentalobjekts aufweist. Vorzugsweise ist die X-Achse linear und der verfahrbare Dentalobjektträger als translatorischer Dentalobjektträger ausgebildet.

Die Aufnahme des Dentalobjektes erfolgt durch ein Rast- bzw. Klemmelement, welches das Dentalobjekt reversibel am verfahrbaren Dentalobjektträger fixiert.

Der verfahrbare Dentalobjektträger erstreckt sich mit seiner stationären Linearführung erfindungsgemäß über die erste Bearbeitungszone, über eine Zwischenzone zwischen den beiden Bearbeitungszonen und über die zweite Bearbeitungszone.

Hierbei erstreckt sich der verfahrbare Dentalobjektträger entlang der X-Achse.

Als X-Achse im Sinne der vorliegenden erfindungsgemäßen Dentalbearbeitungsmaschine ist jede mögliche Bewegungsachse zu verstehen, die sich mindestens über eine erste und eine zweite Bearbeitungszone sowie mindestens eine Zwischenzone erstreckt. Eine X-Achse im Sinne der vorliegenden erfindungsgemäßen Dentalbearbeitungsmaschine liegt also insbesondere auch dann vor, wenn diese auch als Y-Achse oder Z-Achse beschrieben werden könnte. Insbesondere ist die X-Achse nicht auf eine bestimmte Orientierung im Raum festgelegt. Ferner muss die X-Achse nicht notwendig gerade im geometrischen Sinne sein. Vielmehr kann die X-Achse auch abschnittsweise oder ganz gebogen sein oder eine Kurve beschreiben. In jedem Fall bewegt sich der verfahrbare Dentalobjektträger auf der X-Achse entlang einer Bahn.

Indem die stationäre Linearführung sich über die erste und die zweite Bearbeitungszone erstreckt, durchsetzt sie zugleich sowohl den ersten als auch den zweiten Bearbeitungsraum. Die Gehäuse weisen vorzugsweise jeweils eine Öffnung auf die es ermöglicht, eine Überführung des durch den Werkstückträger gehaltenen Dentalobjektes von einen in den anderen Bearbeitungsraum durchzuführen.

Es existiert zudem eine Zwischenzone auf der X-Achse, welche zwischen den beiden Bearbeitungszonen angeordnet ist. Diese Zwischenzone ergibt sich durch die bauliche Trennung der beiden Bearbeitungsräume, wodurch die zugeordneten Bearbeitungszonen nicht direkt aneinander angrenzen. In dieser Zwischenzone kann das Dentalobjekt nicht bearbeitet werden.

Erfindungsgemäß ist der verfahrbare Dentalobjektträger ausgebildet, eine erste Bearbeitungsbewegung in der X-Achse der ersten Bearbeitungszone sowie eine zweite Bearbeitungsbewegung in der X-Achse der zweiten Bearbeitungszone auszuführen. Darüber hinaus ist der verfahrbare Dentalobjektträger ausgebildet, eine Transportbewegung in der Zwischenzone zwischen den Bearbeitungszonen auszuführen.

Durch die Bearbeitungsbewegungen erfolgt die exakte Positionierung des Dentalobjekts relativ zu dem Bearbeitungskopf der jeweiligen Bearbeitungseinheit in deren jeweiliger X-Achse.

Ferner werden bevorzugt die Positionierung von Dentalobjekt und Bearbeitungskopf relativ zueinander in weiteren Bewegungsachsen durchgeführt, wobei dies je nach konstruktiver Ausbildung durch den Bearbeitungskopf oder durch zusätzliche Vorrichtungen, die dem verfahrbaren Dentalobjektträger zugeordnet sind, erfolgen kann. Hierbei kann es sich sowohl um translatorische oder rotatorische Bewegungsachsen handeln. Vorzugsweise führt der Bearbeitungskopf zumindest eine translatorische Bewegungsachse in einer Z-Achse aus, indem er linear zu dem Dentalobjekt auf dem verfahrbaren Dentalobjektträger hin- und rückgefahren wird.

Damit ist die erfindungsgemäße Dentalbearbeitungsmaschine zum ersten dadurch gekennzeichnet, dass mit dem verfahrbaren Dentalobjektträger, also mit ein und demselben konstruktiven Mittel, die X-Achsen-Bearbeitungsbewegungen von zwei Dentalbearbeitungseinheiten bereitgestellt werden. Hierzu wird die jeweilige X-Achsen Position durch die Steuerungseinheit in dem jeweiligen Koordinatensystem einer jeden Dentalbearbeitungseinheit verarbeitet und die Bewegung des verfahrbaren Trägers des verfahrbaren Dentalobjektträgers angesteuert.

Zum zweiten ist die Dentalbearbeitungsmaschine dadurch gekennzeichnet, dass mit dem verfahrbaren Dentalobjektträger zusätzlich eine bloße Transportbewegung bereitgestellt wird, wie sie regelmäßig durch Handlingstechnik durchgeführt wird. Der Dentalobjektträger ist also zugleich so ausgebildet, dass er das Dentalobjekt zwischen den beiden Bearbeitungszonen hin und her bewegen kann.

Ein Vorteil der Erfindung liegt darin, dass bei einem Wechsel der Bearbeitungstechnologie das Dentalobjekt im verfahrbaren Dentalobjektträger fixiert bleibt. Das System muss also nur einmal die Position des verfahrbaren Dentalobjektträgers bestimmen und kann diese in ein für die Dentalbearbeitungsmaschine einheitliches Koordinatensystem übertragen. Die Position bleibt während des gesamten Prozesses bekannt. Damit entfällt als Vorteil der Zeitaufwand für eine erneute Kalibrierung.

Weiterhin besteht der Vorteil, dass das Dentalobjekt in beiden Dentalbearbeitungseinheiten in ein und derselben Einspannung bearbeitet werden kann. Die letztlich nie gänzlich vermeidbaren Toleranzen der Position des Dentalobjekts relativ zu dem Dentalobjektträger sind bei der Bearbeitung in beiden Dentalbearbeitungseinheiten damit gleich, so dass eine besonders hohe Präzision der Bearbeitungen in den Dentalbearbeitungseinheiten relativ zueinander erreicht werden kann.

Weiterhin entfallen somit Einricht- und Justierarbeiten, womit vorteilhaft eine Zeitersparnis erreicht wird.

Ein weiterer Vorteil besteht in einer Kostenersparnis, da lediglich ein verfahrbarer Dentalobjektträger für beide Bearbeitungseinheiten benötigt wird. Lediglich die stationäre Linearführung, also in der Regel eine Linearführungsschiene, muss entsprechend länger ausgeführt werden.

Weiterhin besteht der Vorteil, dass separate Handlingsvorrichtungen, wie sie nach dem Stand der Technik ein Dentalobjekt von einer Dentalbearbeitungsstation in eine andere Dentalbearbeitungsstation überführen, entfallen können. Zudem kann dadurch der Transport wesentlich schneller ausgeführt und Zeit eingespart werden.

Ein weiterer Vorteil ist es, dass maschinelle oder menschliche Fehler bei der Überführung des Dentalobjektes in verschiedene Halterungen komplett verhindert werden können.

Gemäß einer vorteilhaften Weiterbildung beruhen die beiden Dentalbearbeitungseinheiten auf zueinander unterschiedlichen Technologien, welche eine spanende Bearbeitung, ein Strahlschneiden, eine additive Fertigung oder ein Markieren des Dentalobjekts ermöglichen.

Erfindungsgemäß ist jede Dentalbearbeitungseinheit ausgebildet, das Dentalobjekt mit je einer der genannten Technologien zu bearbeiten.

Beruhen die Dentalbearbeitungseinheiten auf unterschiedlichen Technologien, kann das Dentalobjekt vorteilhaft unterschiedlichen Bearbeitungstechnologien unterzogen werden, ohne dass sich Toleranzen der Position des Dentalobjekts relativ zu dem Dentalobjektträger nachteilig auswirken.

So können beispielsweise additive Verfahren (beispielsweise 3D-Drucken mit einem Komposit) mit einem Aushärtungsschritt (beispielsweise Bestrahlung mit UV-Strahlung und/oder thermische Behandlung) kombiniert werden.

Besonders vorteilhaft ist hier, dass selbst ein schneller und mehrfacher Wechsel der Bearbeitungseinheiten ohne Einricht- oder Justierungsmaßnahmen von der Dentalbearbeitungsmaschine durchgeführt werden kann. So ist eine schnellere und effizientere Bearbeitung des Dentalobjekts möglich.

Die spanenden Bearbeitungsmethoden umfassen insbesondere Bohren, Fräsen und Schleifen. Es ist auch möglich, in beiden Dentalbearbeitungseinheiten beispielsweise zu fräsen, hierbei aber unterschiedliche Fräswerkzeuge zu verwenden. Sonst nach dem Stand der Technik übliche Werkzeugwechsel können so in bestimmten Anwendungen vermieden werden.

Als Strahlschneidverfahren werden alle Verfahren angesehen, welche mittels einem fluiden Medium (partikelhaltiges Gas, Flüssigkeiten) oder elektromagnetischen Strahlen (insbesondere Laser) eine trennende Bearbeitung des Dentalobjektes bereitstellen. Diese Verfahren (beispielsweise Wasserstrahl-, Sandstrahl oder Laserschneidverfahren) sind als solche aus dem Stand der Technik bekannt.

Als Markierungsverfahren werden alle Verfahren angesehen, welche zur Markierung des Dentalobjektes dienen. Die Markierung kann als eine tatsächliche physische Markierung wie eine Stempelung, ein Branding oder eine Gravierung sowie als eine digitale Markierung erfolgen. Bei einer digitalen Markierung kann beispielsweise eine optische Vermessung des Dentalobjektes erfolgen, wobei die Daten aus dieser Vermessung zur weiteren Verarbeitung oder Kontrolle dienen.

Der verfahrbare Dentalobjektträger weist gemäß einer vorteilhaften Weiterbildung mindestens eine weitere Bewegungsachse auf.

Hierbei kann es sich sowohl um eine translatorische als auch eine rotatorische Bewegungsachse handeln. Insbesondere umfasst diese vorteilhafte Weiterbildung also Vorrichtungen, mittels derer das Dentalobjekt auf dem verfahrbaren Träger, insbesondere einem Schlitten, beispielsweise schwenkbar oder in einer Y-Achse verfahrbar ist.

Weist der verfahrbare Dentalobjektträger mindestens eine weitere Bewegungsachse auf, können komplexere Dentalobjekte in einer vergleichsweise kleinen Bearbeitungszone bearbeitet werden.

Bei vielen Technologien ist es günstiger, das Dentalobjekt unter einem starren Bearbeitungskopf mittels mehrerer Bewegungsachsen zu positionieren als einen Bearbeitungskopf mit Bewegungsmitteln in den entsprechenden Freiheitsgraden auszustatten.

Besonders vorteilhaft ist hier, dass eine Präzisionsmechanik für die mindestens eine weitere Bewegungsachse an dem verfahrbaren Dentalobjektträger lediglich einmal bereitgestellt werden muss und trotzdem für die Bewegung in beiden Dentalbearbeitungseinheiten genutzt werden kann. Dadurch können weitere Kosten eingespart werden. Ferner kann der Aufwand für jeweils separate Kalibrierungen in der mindestens einen weiteren Bewegungsachse vermieden werden, da auch diese mindestens eine weitere Bewegungsachse in ein gemeinsames Koordinatensystem beider Dentalbearbeitungseinheiten aufgenommen werden kann.

Gemäß einer nächsten vorteilhaften Weiterbildung weist die Dentalbearbeitungsmaschine mehr als zwei Dentalbearbeitungseinheiten auf.

Weist die Dentalbearbeitungsmaschine mehr als zwei Dentalbearbeitungseinheiten auf, können weitere Bearbeitungsschritte des Dentalobjektes durchgeführt werden. So ist beispielsweise eine mechanische Politur nach dem bereits beschriebenen 3D-Verfahren denkbar.

Dies ermöglicht es besonders vorteilhaft, je nach Grad der Komplexität unter Umständen den gesamten Bearbeitungsprozess in nur einer Dentalbearbeitungsmaschine und mit nur einer Einspannung automatisiert durchzuführen.

Die Erfindung wird als Ausführungsbeispiel anhand von
- Fig. 1: Dentalbearbeitungsmaschine mit Stellung in der zweiten Bearbeitungszone
- Fig. 2: Dentalbearbeitungsmaschine mit Stellung in der ersten Bearbeitungszone
- Fig. 3: Prinzipdarstellung
näher erläutert.

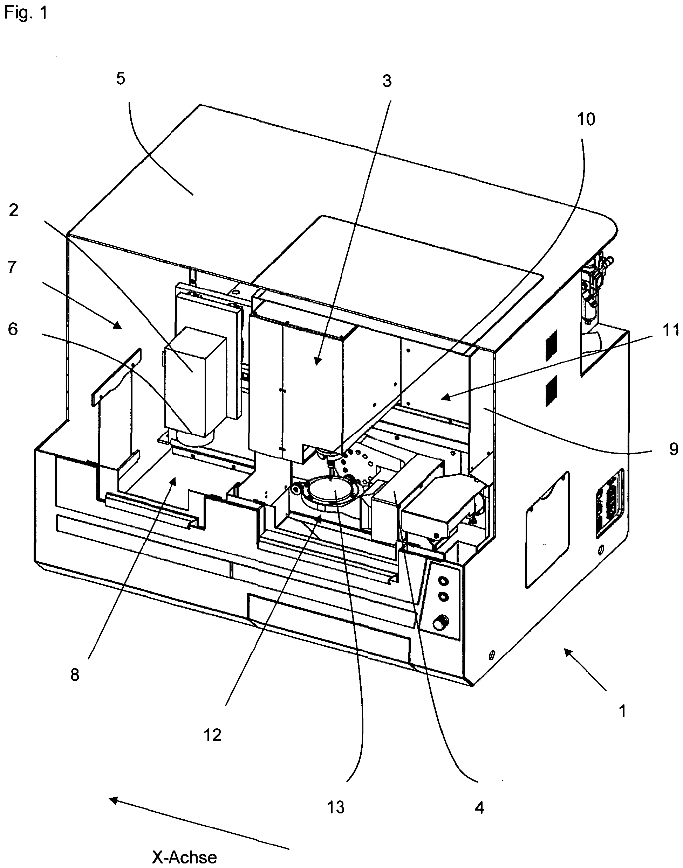

In Figur 1 ist die Dentalbearbeitungsmaschine 1 in der Stellung für eine Bearbeitung in der zweiten Bearbeitungszone 12 dargestellt.

Die Dentalbearbeitungsmaschine 1 weist eine erste Dentalbearbeitungseinheit 2 und eine zweite Dentalbearbeitungseinheit 3 sowie einen verfahrbaren Dentalobjektträger 4 auf.

Die erste Dentalbearbeitungseinheit 2 weist ein erstes Gehäuse 5, einen ersten Bearbeitungskopf 6, einen ersten Bearbeitungsraum 7 und eine erste Bearbeitungszone 8 auf.

Die zweite Dentalbearbeitungseinheit 3 weist ein zweites Gehäuse 9, einen zweiten Bearbeitungskopf 10, einen zweiten Bearbeitungsraum 11 und eine zweite Bearbeitungszone 12 auf.

Das erste Gehäuse 5 umschließt den ersten Bearbeitungsraum 7. Die erste Bearbeitungszone 8 befindet sich unterhalb des ersten Bearbeitungskopfes 6.

Ferner ist das erste Gehäuse 5 im vorliegenden Ausführungsbeispiel als besondere Variante als ein Außengehäuse ausgebildet und nimmt zusätzlich die zweite Dentalbearbeitungseinheit 3 komplett auf. Das zweite Gehäuse 9 grenzt den zweiten Bearbeitungsraum 11 von dem ersten Bearbeitungsraum 7 ab, in welchem sich der zweite Bearbeitungskopf 10 und die zweite Bearbeitungszone 12 befindet. Das zweite Gehäuse 9 ist mittels einer Öffnung so ausgebildet, dass der verfahrbare Dentalobjektträger 4 das Dentalobjekt 13 zwischen den beiden Bearbeitungszonen 8, 12 linear verfahren kann. Hierzu wird der verfahrbare Dentalobjektträger 4 mittels einer Laufschiene und eines Schlittens entlang der X-Achse verschoben.

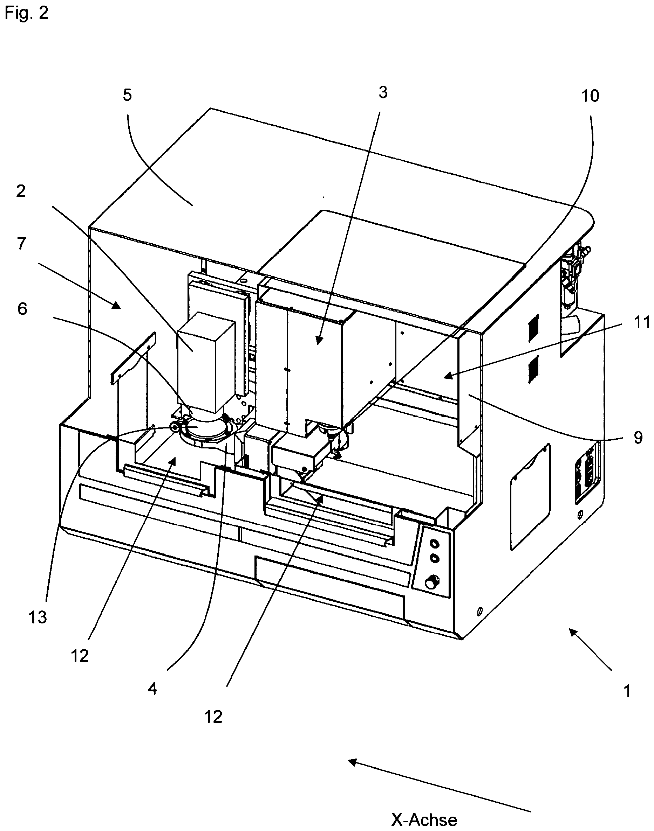

Die Bewegung des verfahrbaren Dentalobjektträgers 4 in der X-Achse ist in Figur 2 ergänzend dargestellt. In dieser hat der verfahrbare Dentalobjektträger 4 das Dentalobjekt 13 in der ersten Bearbeitungszone 8 der ersten Dentalbearbeitungseinheit 2 positioniert.

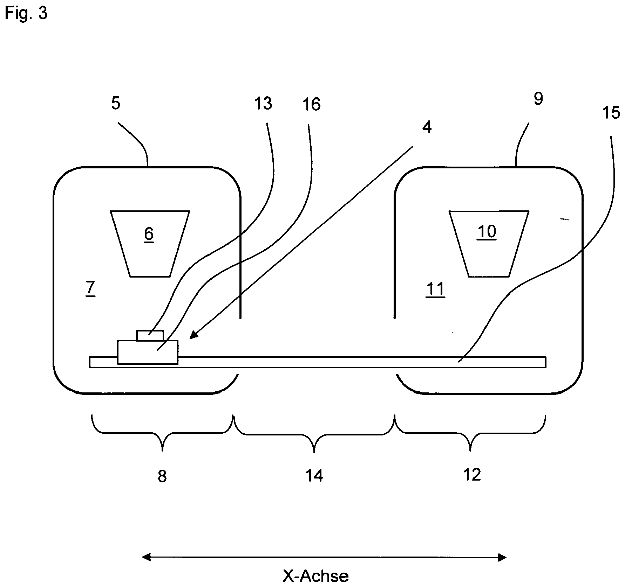

Figur 3 zeigt in einer Prinzipdarstellung die grundsätzliche Anordnung des ersten Gehäuses 5 mit erstem Bearbeitungskopf 6 und erstem Bearbeitungsraum 7 sowie des zweiten Gehäuses 9 mit zweitem Bearbeitungskopf 10 und zweitem Bearbeitungsraum 11. Der verfahrbare Dentalobjektträger 4 trägt das Dentalobjekt 13 und weist als stationäre Linearführung eine Linearschiene 15 und als verfahrbaren Träger einen Linearläuferschlitten 16 auf.

Ferner zeigt Figur 3 die prinzipielle Anordnung von erster Bearbeitungszone 8, Zwischenzone 14 und zweiter Bearbeitungszone 12, entlang derer der Linearläuferschlitten 16 in der X-Achse verfährt. Dabei handelt es sich in der ersten Bearbeitungszone 8 um die erste Bearbeitungsbewegung und in der zweiten Bearbeitungszone 12 um die zweite Bearbeitungsbewegung in der Zwischenzone 14 um eine Transportbewegung.

### Verwendete Bezugszeichen

- 1: Dentalbearbeitungsmaschine
- 2: erste Dentalbearbeitungseinheit
- 3: zweite Dentalbearbeitungseinheit
- 4: verfahrbarer Dentalobjektträger
- 5: erstes Gehäuse
- 6: erster Bearbeitungskopf
- 7: erster Bearbeitungsraum
- 8: erste Bearbeitungszone
- 9: zweite Gehäuse
- 10: zweiter Bearbeitungskopf
- 11: zweiter Bearbeitungsraum
- 12: zweite Bearbeitungszone
- 13: Dentalobjekt
- 14: Zwischenzone
- 15: Linearschiene
- 16: Linearläuferschlitten

## Patentansprüche

1. Dentalbearbeitungsmaschine (1),
aufweisend eine erste Dentalbearbeitungseinheit (2), eine zweite Dentalbearbeitungseinheit (3) und einen verfahrbaren Dentalobjektträger (4),
wobei die erste Dentalbearbeitungseinheit (2) ein erstes Gehäuse (5) und einen ersten Bearbeitungskopf (6) aufweist,
wobei das erste Gehäuse (5) einen ersten Bearbeitungsraum (7) ausbildet, wobei der erste Bearbeitungskopf (6) in dem ersten Bearbeitungsraum (7) angeordnet ist,
und wobei dem ersten Bearbeitungskopf (6) eine erste Bearbeitungszone (8) zugeordnet ist,
wobei die zweite Dentalbearbeitungseinheit (3) ein zweites Gehäuse (9) und einen zweiten Bearbeitungskopf (10) aufweist,
wobei das zweite Gehäuse (9) einen zweiten Bearbeitungsraum (11) ausbildet,
wobei der zweite Bearbeitungskopf (10) in dem zweiten Bearbeitungsraum (11) angeordnet ist
und wobei dem zweiten Bearbeitungskopf (10) eine zweite Bearbeitungszone (12) zugeordnet ist,
wobei der verfahrbare Dentalobjektträger (4) ausgebildet ist, ein Dentalobjekt (13) aufzunehmen und dieses in einer X-Achse linear zu verfahren, wobei der verfahrbare Dentalobjektträger (4) eine stationäre Linearführung, die entlang der X-Achse angeordnet ist, und einen auf der stationären Linearführung linear verfahrbaren Träger mit einem Mittel zur Fixierung des Dentalobjekts, aufweist,
sich die stationäre Linearführung des verfahrbaren Dentalobjektträgers (4) über die erste Bearbeitungszone (8), zweite Bearbeitungszone (12) und eine Zwischenzone (14) zwischen den beiden Bearbeitungszonen (8, 12) erstreckt,
**dadurch gekennzeichnet, dass** der verfahrbare Dentalobjektträger (4) ausgebildet ist, mittels des linear verfahrbaren Trägers relativ zu der stationären Linearführung eine erste X-Achsen-Bearbeitungsbewegung in der ersten Bearbeitungszone (8), eine zweite X-Achsen-Bearbeitungsbewegung in der zweiten Bearbeitungszone (12) und eine Transportbewegung in der Zwischenzone (14) zwischen den Bearbeitungszonen (8, 13) auszuführen.

2. Dentalbearbeitungsmaschine nach Anspruch 1,
**dadurch gekennzeichnet,**
**dass** jede der beiden Dentalbearbeitungseinheiten (2, 3) ausgebildet ist, das Dentalobjekt mit mindestens je einer Technologie aus der Gruppe
- eine spanende Bearbeitung,
- ein Strahlschneiden,
- eine additive Fertigung
- eine Aushärtung,
- ein Markieren,
zu bearbeiten,
und wobei die erste (2) und die zweite Dentalbearbeitungseinheit (3) zueinander unterschiedliche Technologien aufweisen.

3. Dentalbearbeitungsmaschine nach Anspruch 1 oder 2,
**dadurch gekennzeichnet,**
**dass** der verfahrbare Dentalobjektträger (4) mindestens eine weitere Bewegungsachse aufweist.

4. Dentalbearbeitungsmaschine nach einem der vorhergehenden Ansprüche, **dadurch gekennzeichnet,**
**dass** die Dentalbearbeitungsmaschine mehr als zwei Dentalbearbeitungseinheiten aufweist.

## Claims

1. A dental machine tool (1),
comprising a first dental machining unit (2), a second dental machining unit (3) and a movable dental object carrier (4),
wherein the first dental machining unit (2) comprises a first housing (5) and a first machining head (6),
wherein the first housing (5) forms a first machining space (7), wherein the first machining head (6) is arranged in the first machining space (7),
and wherein a first machining zone (8) is allocated to the first machining head (6),
wherein the second dental machining unit (3) comprises a second housing (9) and a second machining head (10),
wherein the second housing (9) forms a second machining space (11), wherein the second machining head (10) is arranged in the second machining space (11),
and wherein a second machining zone (12) is allocated to the second machining head (10),
wherein the movable dental object carrier (4) is designed to receive a dental object (13) and to move it linearly in an X axis, wherein the movable dental object carrier (4) comprises a stationary linear guide being arranged along the X axis and a carrier which is linearly movable on the stationary linear guide and provides means for the fixation of the dental object,
the stationary linear guide of the movable dental object carrier (4) extends over the first machining zone (8), the second machining zone (12) and an intermediate zone (14) between the two machining zones (8, 12), **characterized in that** the movable dental object carrier (4) is designed such that, by means of the linearly movable carrier and relative to the stationary linear guide, it executes a first X axis machining movement in the the first machining zone (8), a second X axis machining movement in the second machining zone (12), and a transport movement in the intermediate zone (14) between the machining zones (8, 12).

2. The dental machine tool according to claim 1,
**characterized in**
**that** each of the two dental machining units (2, 3) is designed to machine the dental object by means of at least one technology from the group of
- shape cutting
- beam cutting
- additive manufacturing
- curing
- marking,
and wherein the first (2) and the second dental machining units (3) provide technologies different from each other.

3. The dental machine tool according to claim 1 or 2,
**characterized in**
**that** the movable dental object carrier (4) has at least one further movement axis.

4. The dental machine tool according to one of the preceding claims,
**characterized in**
**that** the dental machine tool has more than two dental machining units.

## Revendications

1. Machine d'usinage dentaire (1),
comprenant une première unité de traitement dentaire (2), une deuxième unité de traitement dentaire (3) et un porte-objet dentaire mobile (4),
où la première unité de traitement dentaire (2) comprend un premier boîtier (5) et une première tête de traitement (6),
où le premier boîtier (5) forme un premier espace d'usinage (7),
où la première tête d'usinage (6) est disposée dans le premier espace d'usinage (7),
et où une première zone d'usinage (8) est associée à la première tête d'usinage (6),
où la deuxième unité de traitement dentaire (3) comprend un deuxième boîtier (9) et une deuxième tête de traitement (10),
où le deuxième boîtier (9) forme un deuxième espace d'usinage (11),
où la deuxième tête d'usinage (10) est disposée dans le deuxième espace d'usinage (11),
et où une deuxième zone d'usinage (12) est associée à la deuxième tête d'usinage (10),
où le porte-objet dentaire mobile (4) est conçu pour recevoir un objet dentaire (13) et pour déplacer celui-ci linéairement selon un axe X, où le porte-objet dentaire mobile (4) présente un guidage linéaire stationnaire qui est disposé le long de l'axe X, et un support déplaçable linéairement sur le guidage linéaire stationnaire avec un moyen pour fixer l'objet dentaire, le guidage linéaire stationnaire du porte-objet dentaire mobile (4) s'étend sur la première zone d'usinage (8), la deuxième zone d'usinage (12) et une zone intermédiaire (14) entre les deux zones d'usinage (8, 12),
est **caractérisée en ce que** le support d'objet dentaire mobile (4) est conçu pour effectuer, au moyen du support déplaçable linéairement par rapport au guidage linéaire stationnaire, un premier mouvement d'usinage selon l'axe X dans la première zone d'usinage (8), un deuxième mouvement d'usinage selon l'axe X dans la deuxième zone d'usinage (12) et un mouvement de transport dans la zone intermédiaire (14) entre les zones d'usinage (8, 13).

2. Machine d'usinage dentaire suivant la revendication 1 est **caractérisée en ce**
**que** chacune des deux unités de traitement dentaire (2, 3) est conçue pour usiner l'objet dentaire avec au moins une technologie respective du groupe suivant
- un usinage par enlèvement de copeaux,
- une découpe au jet,
- une fabrication additive
- une polymérisation,
- un marquage,
et où la première (2) et la deuxième unité de traitement dentaire (3) présentent des technologies différentes l'une de l'autre.

3. Machine d'usinage dentaire suivant les revendications 1 ou 2
est **caractérisée en ce**
**que** le porte-objet dentaire mobile (4) présente au moins un autre axe de déplacement.

4. Machine d'usinage dentaire suivant une des revendications précédentes est **caractérisée en ce**
**que** la machine d'usinage dentaire présente plus de deux unités de traitement dentaire.
